# EUROPÄISCHE PATENTANMELDUNG

(11) **EP 1 180 354 A2**
(43) Veröffentlichungstag der Anmeldung: **20.02.2002**
(21) Anmeldenummer: 01890233.8
(22) Anmeldetag: 14.08.2001
(51) Int. Cl.: A61J 7/00, G06F 19/00, G07F 7/02

(54) **System zur Medikamentenabgabe**

(30) Priorität: 18.08.2000 AT 14332000
(71) Anmelder: Mohl, Werner, Prof. DDr., 1090 Wien (AT)
(72) Erfinder: Mohl, Werner, Prof. DDr., 1090 Wien (AT)
(74) Vertreter: Laminger, Norbert, Mag.

(57) **Zusammenfassung**

Ein automatisiertes System zur Medikamentenabgabe besteht aus zumindest einer Schreib-Einrichtung für zumindest ein Medikament codierende Daten, zumindest einem Ausgabeautomaten, der mit einer Anzahl von separaten, je ein Medikament aufnehmenden Abteilen und einer Auswerte-Einrichtung für die codierenden Daten versehen ist, wobei die Auswerte-Einrichtung zur Ausgabe eines diese Daten re-präsentierenden Signals an eine mit der Lese-Einrichtung verbundene elektronische Schaltung zum Öffnen zumindest eines der Abteile in Abhängigkeit von diesem Signal ausgelegt ist, sowie mit einer Anzahl von transportablen Speichermedien. Um bei weniger Fehleranfälligkeit eine Vereinfachung und wirtschaftlicheres Betreiben des Systems zu erlauben, ist die Schreib-Einrichtung zum Beschreiben der Speichermedien mit den zumindest ein Medikament codierenden Daten ausgelegt und weist der Ausgabeautomat eine Lese-Einrichtung zumindest zum Ablesen der zumindest ein Medikament codierenden Daten auf den Speichermedien auf, welche Lese-Einrichtung mit der Auswerte-Einrichtung verbunden ist.

## Beschreibung

Die Erfindung betrifft ein automatisiertes System zur Medikamentenabgabe, mit zumindest einer Schreib-Einrichtung für zumindest ein Medikament codierende Daten, zumindest einem Ausgabeautomaten, der mit einer Anzahl von separaten, je ein Medikament aufnehmenden Abteilen und einer Auswerte-Einrichtung für die codierenden Daten versehen ist, wobei die Auswerte-Einrichtung zur Ausgabe eines diese Daten re-präsentierenden Signals an eine mit der Lese-Einrichtung verbundene elektronische Schaltung zum Öffnen zumindest eines der Abteile in Abhängigkeit von diesem Signal ausgelegt ist, sowie mit einer Anzahl von transportablen Speichermedien.

Die bisherige Praxis in der Ausgabe von Medikamenten besteht darin, dass ein Patient nach Konsultation eines Arztes von diesem ein hand- oder maschingeschriebenes Rezept ausgehändigt bekommt und gegen Vorlage dieses Rezeptes in einer Apotheke das verschriebene Medikament erhält. Dabei sind mancherlei Fehlerquellen, wie etwa undeutlich geschriebene Rezepte, vorhanden und neben dem behandelnden Arzt ist auch das Personal in der Apotheke ein wesentlicher Kostenfaktor.

Ein automatisiertes Ausgabesystem für pharmazeutische Produkte ist beispielsweise in der WO95/25423 beschrieben. Dabei sind im bekannten System Patientenkarten vorgesehen, durch welche sich der Patient am Ausgabeautomaten identifizieren kann, um das vom Arzt direkt zum Ausgabeautomaten transferierte Rezept einzulösen. Damit ist aber der Patient an einen bestimmten Ausgabeautomaten gebunden.

Daher war die Aufgabe der vorliegenden Erfindung ein System zur Medikamentenabgabe, welches bei weniger Fehleranfälligkeit eine Vereinfachung und wirtschaftlicheres Betreiben des Systems erlaubt.

Zur Lösung der Aufgabe ist das System erfindungsgemäß dadurch gekennzeichnet, dass die Schreib-Einrichtung zum Beschreiben der Speichermedien mit den zumindest ein Medikament codierenden Daten ausgelegt ist, und dass der Ausgabeautomat eine Lese-Einrichtung zumindest zum Ablesen der zumindest ein Medikament codierenden Daten auf den Speichermedien aufweist, welche Lese-Einrichtung mit der Auswerte-Einrichtung verbunden ist. Damit kann statt eines geschriebenen Rezeptes die Verordnung als digitaler elektronischer Datensatz auf einem dem Patienten zugeordneten Speichermedium abgespeichert werden, womit undeutliche Schrift als Fehlerquelle ausgeschlossen ist. Ohne weiteren Personalaufwand kann der Patient dann bei einem Ausgabeautomaten sein Speichermedium automatisch ablesen lassen und kann dann das der ärztlichen Verordnung entsprechende Medikament aus dem Automaten entnehmen, wobei er auch nicht an vorgegebene Öffnungszeiten von Apotheken gebunden und somit viel flexibler ist. Da die Automaten nur eine begrenzte Aufnahmekapazität haben, ist dieses System für die am häufigsten verschriebenen Medikamente vorgesehen, welche selbstverständlich in den Automaten unter exakter Feuchtigkeits- und Temperaturkontrolle aufbewahrt werden.

Gemäß einer ersten Ausführungsform kann vorgesehen sein, dass das beschreibbare Speichermedium auf einer Smart-Card befestigt ist. Dies gestattet die kostengünstige, platzsparende und für den Benutzer aufgrund der schon sehr gebräuchlichen Verwendung von Kredit- und Bankomatkarten, Kundenkarten, Servicekarten und dgl. praktische Ausgabe von Rezepten, ohne dass verlustanfällige und von anderen Personen einsehbare Schriftstücke angefertigt werden müssen.

In bewährter Weise könnte das beschreibbare Speichermedium ein Mikrochip, vorzugsweise auf einer derartigen Smart-Card, sein. Andererseits ist auch die Speicherung der "Rezeptdaten" auch auf einem Magnetstreifen, wieder vorzugsweise auf einer Smart-Card in Kreditkarten-Größe, vorgenommen werden.

Um dem Arzt das Ausstellen des "elektronischen Rezeptes" zu erleichtern, Fehler bei der Rezepterstellung zu verhindern und rasch und einfach dem Arzt eine Übersicht über die in den Ausgabeautomaten verfügbaren Medikamente zu geben, ist gemäß einem weiteren Merkmal der Erfindung vorgesehen, dass die Schreib-Einrichtung zum Beschreiben des Speichermediums mit einer Speichereinrichtung für eine Anzahl von Medikamentencodes verbunden ist, allenfalls mit einer Eingabeeinrichtung zur Auswahl zumindest eines Medikamentencodes versehen ist.

Vorteilhafterweise ist zur einfachen und raschen Ausstellung des "elektronischen Rezeptes" und vorzugsweise zur gleichzeitigen Registrierung und Archivierung beim Arzt in der Krankengeschichte des Patienten die Schreib-Einrichtung mit einem Computer und dessen Bedienungselementen sowie Anzeige-Einrichtungen verbunden. Dieser Computer kann ein Desktop-Gerät in einer Praxis oder einem Spital sein, jedoch auch ein mobiles, vom Arzt etwa bei Hausbesuchen mitgeführtes Gerät wie etwa ein Laptop, Palmtop oder PDA. Dieser Computer kann, in jeder Ausführung, zusätzlich mit einer Schreib- und/oder Lese-Einrichtung für ein weiteres Speichermedium eingerichtet sein, um im Gerät selbst abgelegte Daten zu aktualisieren. So könnten Patientendaten aber auch Medikamentendaten immer auf den neuesten Stand gebracht bzw. dem Arzt auf das im gerade zur Verfügung stehende Gerät überspielt werden. Alternativ dazu können diese Daten auch über andere Kanäle geladen oder aktualisiert werden, beispielsweise über Mobilfunk, Internet od.dgl., wenn der Computer mit Empfangseinrichtungen (Netzwerkkarte, Modem, CardPhone, etc.) und entsprechenden Hilfsprogrammen ausgestattet ist.

Um einen Missbrauch durch den Patienten zu verhindern und eine Kontrolle über die Abholung des verschriebenen Medikamentes zu gestatten, kann gemäß einem weiteren Merkmal des erfindungsgemäßen Systems vorgesehen sein, dass der Ausgabeautomat zusätzlich eine Schreib-Einrichtung für das Speichermedium aufweist und die elektronische Schaltung mit der Schreib-Einrichtung verbunden ist und nach Öffnung eines Medikamenten-Abteils ein Steuer-Signal zur Betätigung der Schreib-Einrichtung abgibt, welche Schreib-Einrichtung dieses Medikament und dessen Abgabe codierende Daten auf das Speichermedium überträgt. Damit kann durch nachfolgendes Ablesen des Speichermediums, beispielsweise beim nächsten Kontrollbesuch beim verschreibenden oder einem anderen, in das System eingebundenen Arzt, überprüft werden, ob, wo und wann der Patient das verschriebene Medikament abgeholt hat.

Wenn weiters das Speichermedium auch benutzerspezifische Daten enthält, die elektronischen Schaltung des Ausgabe-Automaten mit einer Speichereinrichtung von die Ausgabe spezifischer Medikamente verbietenden Daten verbunden ist, und die elektronische Schaltung. ein Vergleichs-Untersystem enthält, welches in Abhängigkeit vom Resultat des Vergleichs der Daten auf dem Speichermedium und jenen in der Speichereinrichtung die Abgabe des Öffnungs-Signals für das Abteil des spezifischen Medikaments unterdrückt oder initiiert, kann vermieden werden, dass irrtümlich ein Medikament abgegeben wird, das im Hinblick auf die bisherige Krankengeschichte, den bisherigen Krankheitsverlauf bzw. besondere Eigenheiten und physiologische Gegebenheiten des Patienten negative Auswirkungen hat oder haben könnte. Dabei könnte dieses Vergleichs-Untersystem auch bereits mit der Schreib-Einrichtung beim Arzt gekoppelt sein und bereits die Ausstellung eines "elektronischen Rezeptes" für ein nicht geeignetes Medikament verhindern bzw. dem Arzt dies signalisieren.

Schon bei der Verschreibung des jeweiligen Medikaments kann eine elektronische Reservierung für den jeweiligen Patienten erfolgen, wenn gemäß einem weiteren Erfindungsmerkmal die Schreib-Einrichtung zum Beschreiben des Speichermediums mit dem oder jedem Ausgabeautomaten zumindest zeitweise verbunden ist und mit Signalübertragungs-Einrichtungen gekoppelt ist, welche an zumindest. einen Ausgabeautomaten ein Signal überträgt, welches das spezifische Speichermedium repräsentiert und die Ausgabe des von den Daten auf dem Speichermedium repräsentierte Medikament an Benutzer anderer Speichermedien sperrt.

Um die optimale Verfügbarkeit aller Medikamente an allen Ausgabeautomaten zu gewährleisten, ist vorteilhafterweise vorgesehen, dass zumindest die Schreib-Einrichtungen und/oder die Ausgabeautomaten mit einer zentralen Datenverarbeitungsanlage verbunden ist. Diese kann die Logistik des Systems übernehmen und das Auffüllen der Automaten, deren Wartung und Fehlerbehebung koordinieren. Überdies kann der verschreibende Arzt aufgrund der Rückmeldungen des zentralen logistischen Rechners je nach Verfügbarkeit zwischen alternativen Medikamenten auswählen, wobei auch die Standorte der Ausgabeautomaten und der Arztpraxis bzw. dem Wohnsitz bzw. den Fahrtwegen des Patienten in die Auswahl des zu verschreibenden Medikaments einfließen können.

Gemäß einem weiteren Merkmal der vorliegenden Erfindung ist vorgesehen, dass der Ausgabeautomat mit einem Drucker versehen ist und zumindest einige der auf dem Speichermedium vorhandenen Daten auf Anfrage oder automatisch als Hardcopy ausgibt. Damit können Einnahmehinweise oder andere wichtige, das Medikament bzw. dessen Verwendung betreffende Daten, dem Patienten einfach lesbar mitgegeben werden. Beispielsweise könnte der Drucker diese Daten direkt auf die Medikamentenverpackung aufdrucken, allenfalls auch auf ein separates Medium.

In der nachfolgenden Beschreibung soll die Erfindung anhand eines speziellen Ausführungsbeispieles, aber ohne jegliche einschränkende Wirkung, näher erläutert werden, welches Ausführungsbeispiel einen möglichen Ablauf der Medikamentenausgabe beschreibt.

Der Patient bringt zum Besuch beim Arzt beispielsweise eine Smart-Card mit einem Speichermedium in Form eines Mikrochips oder eines Magnetstreifens mit, auf welchem Speichermedium patientenspezifische Daten, beispielsweise dessen Identität, wichtige physiologische Daten, beispielsweise Körpergröße und -gewicht, speziell aber Leber- und Nierenfunktionswerte oder ähnliche Medikamenteneliminationsfaktoren, und Daten aus der Krankengeschichte, Versicherungsdaten, usw. über ein entsprechendes Lesegerät unmittelbar oder in Verbindung mit einer herkömmlichen EDV-Anlage ablesbar gespeichert sind. Bei Hausbesuchen durch den Arzt kann die Smart-Card mit den Patientendaten, bereits verschriebenen Medikamenten und allenfalls auch relevanten Teilen der Krankengeschichte in eine Lese-Einrichtung eines mobilen, durch den Arzt mitgebrachten Computers oder PDAs eingesetzt und davon gelesen werden. Der behandelnde Arzt kann dann seine Diagnose und Verschreibung von Medikamenten in einfacher Weise und ohne zeitraubende bzw. allenfalls ungenaue Informationen liefernde Rückfragen auf die medizinischen Bedürfnisse und unter Berücksichtigung der Krankengeschichte abstellen. Dies kann jeder mit einem derartigen System ausgestattete Arzt, nicht nur der Arzt, bei welchem die Krankengeschichte des jeweiligen Patienten aufliegt bzw. erstmals erfasst worden ist.

Auf dem Speichermedium können aber auch vom Versicherer bestimmte Vorgaben für Medikamente abgespeichert sein, so dass damit eine optimale und vom Versicherer freigegebene Verschreibung aus einer Vielzahl von gleichwertigen oder annähernd gleichwertigen Produkten erfolgen kann. Auch andere, die Verschreibung beeinflussende Daten können dem Arzt auf dem Speichermedium verfügbar gemacht werden, etwa Allergien und Inkompatibilitäten mit anderen, bereits verschriebenen Medikamenten. Alle diese Daten können in digitaler Form auf dem Speichermedium enthalten und über das Lese- und Anzeigegerät des Arztes diesem verfügbar gemacht werden.

Nachdem der Arzt dann, nach Berücksichtigung aller medizinischen Fakten und der auf dem Speichermedium zugänglichen Daten, ein oder mehrere Medikamente ausgewählt hat, erfolgt anstelle der Ausstellung eines Rezeptformulars in Papierform die Ausstellung eines "elektronischen Rezeptes" durch entsprechendes Beschreiben des Speichermediums auf der Smart-Card des Patienten. Dies erfolgt durch eine auf das Speichermedium abgestimmtes Schreib-Einrichtung, welche wiederum zur leichteren Bedienung an die EDV-Anlage der Arztpraxis angeschlossen sein kann, was gleichzeitig die Abspeicherung in der lokal beim Mediziner vorhandenen Patientenkartei erleichtert. Selbstverständlich könnte die Schreib-Einrichtung aber auch als Einzelgerät ohne Anschluß an andere Anlagen ausgeführt sein.

Der Arzt kann bei der Auswahl der Medikamente natürlich nicht nur durch Daten auf dem Speichermedium unterstützt werden, sondern auch die Schreib-Einrichtung kann eine Speichereinrichtung aufweisen, in welcher Medikamentendaten abgelegt und für den Arzt auf Anfrage ablesbar bereitgestellt sind. So können hier ebenfalls eine Auswahl von gleichwertigen oder annähernd gleichwertigen Produkten aufgelistet sein, allenfalls mit Anmerkungen über die Freigabe durch verschiedene Krankenversicherungsanstalten, mit Anmerkungen über Nebenwirkungen, Wechselwirkungen mit anderen Medikamenten, usw. Vorteilhafterweise enthält die Schreib-Einrichtung oder ein damit gekoppelter Auswertekreis eine Vergleichs-Schaltung, vorteilhafterweise softwaremäßig realisiert, welche aus den patientenspezifischen Daten vom Speichermedium und einer noch eher unspezifischen Eingabe durch den Arzt das optimale Produkt oder eine eingegrenzte Auswahl von Produkten automatisch auswählt und vorschlägt.

Ein weiterer Vorteil ergibt sich, wenn die Schreib-Einrichtung oder diese über die EDV-Anlage beim Arzt mit einer zentralen Stelle im System verbunden ist, welche für die Logistik verantwortlich ist. In einem zentralen Rechner oder Rechnerverbund können Informationen über die Verfügbarkeit der Medikamente, über die Verfügbarkeit an bestimmten Abgabestellen usw. verwaltet und auch den angeschlossenen Ärzten zur Verfügung gestellt werden. Die Produktauswahl kann daher unter Einbeziehung der Verfügbarkeit von Medikamenten an der nächstgelegenen Ausgabestelle, allenfalls auch an anderen, von Arzt oder Patient bevorzugten Ausgabestellen getroffen werden.

Eine Anbindung des Computers des erfindungsgemäßen Systems kann aber auch an ein Verteilernetz für relevante Informationen zweckmäßig sein. So könnte der Arzt aus freien oder durch Subskription kostenpflichtigen Datenbanken neueste Produktinformationen über Medikamente aus dem Internet oder On-line-Datenbanken beziehen und in seinen Verschreibungen berücksichtigen. Er kann diese Informationen allenfalls auch - bei entsprechend ausgestattetem Computer - über Mobilfunk - oder durch Einschieben eines ihm persönlich, per Post od. dgl. übermittelten Speichermediums in die Lese-Einrichtung seines Gerätes beziehen. So ist beispielsweise auf Fortbildungstagungen die neueste Information zugänglich und sofort für den Arzt in der Praxis nutzbar- wobei weiters die Möglichkeit besteht, Tagungsinformationen wie Zeitplan, Proceedings, touristische Informationen zum Tagungsort usw. verfügbar zu machen. Letzter Möglichkeit besteht natürlich auch unabhängig von der praxisrelevanten fachlichen Information über Medikamente oder Behandlungsmethoden.

Die zur Verschreibung zur Verfügung stehenden Produkte können zur Verschreibung dem Arzt in verschiedenen Formen lesbar gemacht werden. So kann er die volle Information über entsprechende Bedienungselemente wie etwa eine alphanumerische Tastatur eingeben, einschließlich Medikamentenbezeichnung, Dosierung, usw. Bei Verbindung der Schreib-Einrichtung ebenfalls mit der EDV-Anlage der Arztpraxis können die entsprechenden Bedienungselemente und Anzeigeeinrichtungen auch mit der Schreib-Einrichtung und der Lese-Einrichtung gekoppelt sein und für das Medikamentenabgabesystem genutzt werden. Alle diese Daten können aber auch in vereinfachter Form, mittels Piktogrammen und Symbolen und entsprechenden Bedienungselementen vorliegen und eine raschere und intuitivere Betätigung der Schreib-Einrichtung erlauben.

Mit seiner Smart-Card und dem darauf abgespeicherten "elektronischen Rezept", welches auch Daten für ein allfälliges "Ablaufdatum" enthalten kann, begibt sich der Patient nun zu einem vom Arzt - anhand der Daten über die Verfügbarkeit an bestimmten Abgabestellen ausgewählten - bestimmten oder einem beliebigen Ausgabe-Automaten des Medikamentenabgabesystems.

In diesen Automaten sind die verfügbaren Medikamente, eine Auswahl aller auf dem Markt befindlichen Produkte, vorteilhafterweise ausgewählt nach der Häufigkeit der Verschreibung, gelagert. Dabei stellen Kühl- und Feuchtigkeitskontrollsysteme die optimalen Lagerbedingungen für die Medikamente sicher, wobei im Falle von vollständig getrennten Abteilen für unterschiedliche Produkte oder Produktgruppen auch auf spezielle Anforderungen abgestimmte unterschiedliche Umgebungsparameter eingestellt werden können. Vorteilhafterweise sind die Ausgabeautomaten in Verbindung mit der oder einer Zentrale, um Störungen oder Ausfälle sofort automatisch zu melden und deren Behebung einzuleiten bzw. über Fernwartung sofort durchführen zu lassen. Auch sind Informationen über den Lagerbestand im Automaten automatisch oder auf Abfrage an die Zentrale zu übermitteln, welche aus diesen Informationen die Aufträge zur Wiederbefüllung erstellt als auch diese Informationen über die Verfügbarkeit oder zeitweilige Nichtverfügbarkeit von einzelnen Produkten den angeschlossenen Schreib-Einrichtungen übermittelt, damit diese Informationen in die Entscheidung über die Verschreibung durch den Arzt mit einfließen können. Über die gleichen Verbindungssysteme können auch die Benutzer der Automaten beispielsweise über entsprechende Bedienungselemente und/oder über Sprachübertragungseinrichtungen zur Zentrale aufnehmen und allfällige Störungen, Anfragen od. dgl. mitteilen und vorzugsweise unmittelbar beantwortet zu bekommen. Eine weitere direkte Verbindung, allenfalls auch über die Zentrale geleitet, kann eine Sperre für die Öffnungsvorrichtung eines bestimmten Medikaments durch eine von der Schreib-Einrichtung eines angeschlossenen Arztes auslösen und Daten übermitteln, mit welcher diese Sperre wieder aufzuheben ist. Der Arzt kann auf diese Weise eine Reservierung des Medikaments für seinen Patienten durchführen, wobei nur mit einem bestimmten oder mit speziellen Daten beschriebenen Speichermedium das Medikament aus dem Ausgabeautomat entnommen werden, d.h. dessen Öffnungsvorrichtung entsperrt werden kann.

Gleichfalls kann eine Verbindung von der Schreib-Einrichtung des Arztes zur Zentrale und/oder der Krankenversicherungsanstalt vorgesehen sein, mittels welcher Rückfragen oder Probleme unmittelbar, rasch und einfach behandelt werden können.

Der Ausgabeautomat ist mit einer Lese-Einrichtung für das Speichermedium auf der Smart-Card der Patienten versehen und kann zumindest über einen entsprechenden Erkennungskreis die relevanten Daten des "elektronischen Rezeptes" von diesem Medium ablesen. Entsprechend diesen Daten wird die Öffnungsvorrichtung des entsprechenden Abteils betätigt, allenfalls eine vom Arzt übermittelte Sperre durch diesen Code beseitigt, und das dadurch codierte Produkt aus seinem Abteil bzw. aus dem Ausgabeautomat abgegeben, wonach es der Patient in Empfang nehmen kann, ohne dass ein Apotheker oder Apothekenhelfer eingreifen muss. Sowohl der Arbeits- und Personalaufwand als auch Fehlerquellen sind dabei weitestgehend vermieden. Letzteres gilt insbesonders dann, wenn Lese-Einrichtungen für Kennzeichnungen auf den Medikamentenpackungen vorhanden sind und in entsprechenden Vergleichsschaltungen mit den die abzugebenden Medikamenten codierenden Daten verglichen werden, so dass die Abgabe der korrekten Produkte sichergestellt ist. Überdies ist der Patient bei der Abholung seiner Medikamente nicht an bestimmte Zeiten, die Öffnungszeiten von Apotheken, gebunden.

Vorteilhafterweise ist der Ausgabeautomat auch mit einer Schreib-Einrichtung zum Beschreiben des Speichermediums auf der Smart-Card des Patienten ausgerüstet. Damit können Informationen auf dem Speichermedium abgespeichert werden, welche u.a. die Ausfolgung bzw. Abholung des verschriebenen Medikaments bestätigen und eine neuerliche Entnahme bzw. Betätigung desselben oder eines anderen Ausgabeautomaten unmöglich machen. Ein Horten von Medikamenten ist somit unterbunden. Dazu kann ein entsprechender Code auf das Speichermedium geschrieben oder das ursprüngliche "elektronische Rezept" gelöscht werden. Gleichzeitig oder alternativ zu diesen Vorgängen können über die oben erwähnten Verbindungen entsprechende Signal an den Arzt, die Zentrale und allenfalls auch die Krankenversicherungsanstalt zur Verrechnung übermittelt werden.

Vorteilhafterweise ist der Ausgabeautomat auch mit einem Drucker ausgerüstet, der wichtige Informationen zum Medikament bzw. der Dosierung, dem Ablaufdatum usw. als Hardcopy ausgibt, automatisch oder auf Abruf durch Betätigung eines entsprechenden Bedienungselementes am Automaten durch den Patienten, und dem Patienten so eine einfach lesbare und jederzeit zugängliche Information bereitstellt. Diese Informationen werden vorzugsweise nicht überschrieben oder gelöscht, so dass sie der Patient bei Verlust des Ausdrucks jederzeit bei einem Ausgabeautomaten wieder ausdrucken lassen kann.

## Patentansprüche

1. Automatisiertes System zur Medikamentenabgabe, mit zumindest einer Schreib-Einrichtung für zumindest ein Medikament codierende Daten, zumindest einem Ausgabeautomaten, der mit einer Anzahl von separaten, je ein Medikament aufnehmenden Abteilen und einer Auswerte-Einrichtung für die codierenden Daten versehen ist, wobei die Auswerte-Einrichtung zur Ausgabe eines diese Daten re-präsentierenden Signals an eine mit der Lese-Einrichtung verbundene elektronische Schaltung zum Öffnen zumindest eines der Abteile in Abhängigkeit von diesem Signal ausgelegt ist, sowie mit einer Anzahl von transportablen Speichermedien, **dadurch gekennzeichnet, daß** die Schreib-Einrichtung zum Beschreiben der Speichermedien mit den zumindest ein Medikament codierenden Daten ausgelegt ist, und dass der Ausgabeautomat eine Lese-Einrichtung zumindest zum Ablesen der zumindest ein Medikament codierenden Daten auf den Speichermedien aufweist, welche Lese-Einrichtung mit der Auswerte-Einrichtung verbunden ist.

2. System nach Anspruch 1, **dadurch gekennzeichnet, dass** das Speichermedium auf einer Smart-Card befestigt ist.

3. System nach Anspruch 2, **dadurch gekennzeichnet, dass** das Speichermedium ein Mikrochip ist.

4. System nach Anspruch 2, **dadurch gekennzeichnet, dass** das Speichermedium ein Magnetstreifen ist.

5. System nach zumindest einem der vorhergehenden Ansprüche, **dadurch gekennzeichnet, dass** die Schreib-Einrichtung mit einer Speichereinrichtung für eine Anzahl von Medikamentencodes verbunden ist.

6. System nach Anspruch 5, **dadurch gekennzeichnet, dass** die Schreib-Einrichtung mit einem herkömmlichen Computer und dessen Bedienungselementen sowie Anzeige-Einrichtungen verbindbar ist.

7. System nach zumindest einem der Ansprüche 1 bis 6, **dadurch gekennzeichnet, dass** der Ausgabeautomat zusätzlich eine Schreib-Einrichtung zum Schreiben von Daten auf das Speichermedium aufweist und die elektronische Schaltung mit der Schreib-Einrichtung verbunden ist und nach Öffnung eines Medikamenten-Abteils ein Steuer-Signal zur Betätigung der Schreib-Einrichtung abgibt, welche Schreib-Einrichtung dieses Medikament und dessen Abgabe codierende Daten auf das Speichermedium überträgt.

8. System nach zumindest einem der Ansprüche 1 bis 7, **dadurch gekennzeichnet, dass** das Speichermedium in an sich bekannter Weise auch benutzerspezifische Daten enthält, dass die elektronischen Schaltung des Ausgabe-Automaten mit einer Speichereinrichtung von die Ausgabe spezifischer Medikamente verbietenden Daten verbunden ist, und dass die elektronische Schaltung ein Vergleichs-Untersystem enthält, welches in Abhängigkeit vom Resultat des Vergleichs der Daten auf dem Speichermedium und jenen in der Speichereinrichtung die Abgabe des Öffnungs-Signals für das Abteil des spezifischen Medikaments unterdrückt oder initiiert.

9. System nach zumindest einem der Ansprüche 1 bis 7, **dadurch gekennzeichnet, dass** das Speichermedium in an sich bekannter Weise auch benutzerspezifische Daten enthält und dass die Schreib-Einrichtung ein Vergleichs-Untersystem enthält, welches in Abhängigkeit vom Resultat des Vergleichs der benutzerspezifischen Daten auf dem Speichermedium und den Medikamentendaten in der Speichereinrichtung ein Signal generiert.

10. System nach zumindest einem der Ansprüche 1 bis 9, **dadurch gekennzeichnet, dass** die Schreib-Einrichtung zum Beschreiben des Speichermediums in an sich bekannter Weise mit dem oder jedem Ausgabeautomaten zumindest zeitweise verbunden ist und mit Signal übertragungs-Einrichtungen gekoppelt ist, welche an zumindest einen Ausgabeautomaten ein Signal überträgt, welches das spezifische Speichermedium repräsentiert und die Ausgabe des von den Daten auf dem Speichermedium repräsentierte Medikament an Benutzer anderer Speichermedien sperrt.

11. System nach zumindest einem der Ansprüche 1 bis 9, **dadurch gekennzeichnet, dass** zumindest eine der Schreib-Einrichtungen und/oder der Ausgabeautomat mit einer zentralen Datenverarbeitungsanlage verbunden ist.
